# EUROPEAN PATENT SPECIFICATION

(11) **EP 1 971 110 B1**
(45) Date of publication and mention of the grant of the patent: **20.05.2009**
(21) Application number: 07290323.0
(22) Date of filing: 16.03.2007
(51) Int. Cl.: H04L 29/08

(54) **Method of invoking an application via a communication network**
Verfahren zum Abrufen einer Anwendung über ein Kommunikationsnetzwerk
Procédé d'appel d'une application via un réseau de communication

(43) Date of publication of application: 17.09.2008
(73) Proprietor: Alcatel Lucent, 75008 Paris (FR)
(72) Inventor: Lemke, Andreas, 70195 Stuttgart (DE)
(74) Representative: Schmidt, Werner Karl

(56) References cited:
- WO-A-20/04063922
- US-A1- 2002 120 729
- US-A1- 2005 181 872
- SHEN ALCATEL-LUCENT Y: "Private Extensions to the Session Initiation Protocol (SIP) for Service Interaction Indicator" IETF STANDARD-WORKING-DRAFT, INTERNET ENGINEERING TASK FORCE, IETF, CH, no. 2, February 2007 (2007-02), XP015050408 ISSN: 0000-0004

## Description

The present invention relates to method of invoking an application on a first terminal associated with a first user via a communication network, to a first terminal and to a computer program product for executing said method.

Nowadays, there are more and more applications that interact with two or more users. Examples are voice over IP (IP = Internet Protocol), conferencing, application sharing, gaming, and entertainment applications. Existing signaling protocols are designed to invite users to voice over IP. multimedia, and conferencing sessions.

Furthermore, session initiation protocol (SIP = session initiation protocol) clients, or so-called SIP user agents, are available which listen for SIP requests on different port numbers. The SIP user agents are used for invoking communication sessions, e.g. voice over IP, multimedia communication over IP, and conferencing sessions, i.e. for invoking streaming communication.

For instance, the US-patent application 2005/0181872 A1 describes a system and a method for the close coupling of SIP based voice over IP with multiplayer network games. SIP enhanced game server and conference servers provide the infrastructure during multiplayer network gaming for real-time communication sessions between the players. The participation in voice conferences is determined by the state of the on-going game. For example, the distance and the direction of the players determine the mixing of the voices of the players in the voice conference. The SIP user agent provides an interface which is used by the gaming application to control the voice conferences.

Other protocols and architecture, such as CORBA, DCOM or SOAP, are used for invoking application services provided on remote terminals (CORBA = Common Object Request Broker Architecture, DCOM = Distributed Component Object Model, SOAP = Simple Object Access Protocol). A frequently used protocol is web services based on SOAP and HTTP (HTTP = Hypertext Transfer Protocol). Web services are client-server based. If web services are used, there must be a web server installed on the terminal. Moreover, there must be a mechanism for finding the terminal and the web server of the user to be invited to the session. This is in particular a problem for terminals that do not have fixed IP addresses. There might be various ways of accomplishing this by using Dynamic DNS (DNS = Domain . Name System), UDDI (UDDI =Universal Description, Discovery and Integration), or asynchronous web services.

US 2002/0120729 A1 describes a network system comprising a service control device and at least one application execution device and a corresponding network control method. The service control device is adapted to receive a service request, to select an appropriate application execution device according to the service request, and to invoke the selected application execution device. The application execution device is adapted to perform the service requested by the service request. US 2002/0120729 A1 provides a flexible service architecture, wherein managing of the requested service and actually executing of the service are performed by different entities. It is the object of the invention to provide a method for invoking an application via a communication network.

The object of the present invention is achieved by a method according to claim 1. The object of the present invention is also achieved by a first terminal according to claim 8. The object of the present invention is further achieved by a computer program product according to claim 9.

The object of the present invention is achieved, by a method of invoking an application on a first terminal associated with a first user via a communication network, whereby for invoking the application, a SIP-invite message comprising information about the application through the communication network is sent to the first terminal associated with the first user whereby the SIP-invite message is directed to the first user, a SIP dispatcher which is a single SIP user agent dedicated for handling several applications intercepts the SIP-invite message at the first terminal, the SIP dispatcher checks if the first user accepts the said SIP-invite message by means of accessing a database comprising user specific data of the first user and/or by requesting an input of a corresponding command via a user interface from the first user, the SIP dispatcher sends a SIP error response message to reject the SIP-invite message to a second user who is indicated in the SIP-invite message as sender of the SIP-invite message, if the first user does not accept the said SIP-invite message, the SIP dispatcher extracts the information about the application from the SIP-invite message and selects an application client associated with the application by means of the extracted information, the SIP dispatcher generates data for instrumenting the selected application client, the SIP dispatcher instruments the selected application client at the first terminal according to the data generated for instrumenting the selected application client, and the SIP dispatcher invokes the selected application client on the first terminal. Instrumenting the application client may consist in proxying the received SIP-invite message to the application client. The object of the present invention is also achieved by a first terminal associated with a first user of a communication network, wherein the first terminal comprises communication means for communicating via the communication network and receiving SIP messages exchanged via the communication network, whereby the first terminal comprises a SIP dispatcher which is a single SIP user agent dedicated for handling several applications and which is adapted to intercept a SIP-invite message received at the first terminal, the SIP-invite messages comprising information about the application whereby the SIP-invite message is directed to the first user, check if the first user accepts the said SIP-invite message by means of accessing a database comprising user specific data of the first user and/or by requesting an input of a corresponding command via a user interface from the first user, send a SIP error response message to reject the SIP-invite message to a second user who is indicated in the SIP-invite message as sender of the SIP-invite message, if the first user does not accept the said SIP-invite message, extract the information about the application from the SIP-invite message and select an application client associated with the application by means of the extracted information, generate data for instrumenting the selected application client, instrument the selected application client at the first terminal according to the data generated for instrumenting the selected application client, and invoke the selected application client on the first terminal. The object of the present invention is further achieved by a computer program product for a first terminal associated with a first user of a communication network, whereby the computer program product, when executed by the first terminal performs the steps of intercepting a SIP-invite message at the first terminal, the SIP-invite message comprising information about the application whereby the SIP-invite message is directed to the first user, checking if the first user accepts the said SIP-invite message by means of accessing a database comprising user specific data of the first user and/or by requesting an input of a corresponding command via a user interface from the first user, sending a SIP error response message to reject the SIP-invite message to a second user who is indicated in the SIP-invite message as sender of the SIP-invite message, if the first user does not accept the said SIP-invite message, extracting the information about the application from the SIP-invite message and selecting an application client associated with the application by means of the extracted information, generating data for instrumenting the selected application client, instrumenting the selected application client at the first terminal according to the data generated for instrumenting the selected application client, and invoking the selected application client on the first terminal.

The present invention provides, by reusing a pre-existent SIP/IP infrastructure (possibly but not necessarily compliant with IMS (IMS = IP multimedia subsystem)), a highly adaptable and "user friendly" method of invoking remotely applications with a single SIP dispatcher which is a single SIP user agent dedicated for handling several applications. The reuse of the pre-existent SIP/IMS infrastructure guarantees that the IP-address of the invitee to an application is always known. In particular, SIP provides extensive mechanisms including, user identification, registration, authentication, routing and redirect servers, home subscriber servers, roaming, and application servers. The SIP dispatcher is the only necessary SIP user agent to run on the first terminal for handling a plurality of different applications, which therefore improves the reliability. In particular, applications are only started if they have been requested. Moreover, by using a single SIP user agent, i.e. the SIP dispatcher, for all applications, the session initiation can be handled via a single network port, i.e. a single IP-port: This is especially desired by users having their terminal located behind a network address translation firewall. Further on, the present invention is not limited to be used in combination with different kinds of real-time applications like IP television (IPTV = IP television) or voice over IP conferencing. With the present invention, it is possible to start any application remotely. Particularly, application clients may not even be installed on the client-side at the time the invitation arrives, the respective application client is installed on demand.

Further advantages are achieved by the embodiments of the invention indicated by the dependent claims.

According to a preferred embodiment of the invention the SIP dispatcher accesses a database for selecting an application client: The database holds information about one or more different application clients available at the first terminal. Preferably, the database is part of the first terminal, the SIP dispatcher or a remote database server. For example, the database is realized as a look-up table. The SIP dispatcher determines by means of the extracted information which of said available one or more application clients corresponds with the application. Preferably, the SIP dispatcher selects a conversational SIP client instead if the application client is not available or rejects the invitation if it can determine that it is not an invitation for a conversational SIP session.

According to a preferred embodiment of the invention, the SIP dispatcher accesses a database for generating data for instrumenting the selected application client. The database holds information about application client related data associated to the application, user specific data of the first user, and/or of a second user who is indicated in the SIP-invite message as sender of the SIP-invite message. For example, the database is part of the first terminal, the SIP dispatcher or a remote database server. Preferably, the database is constituted of a plurality of databases, e.g. a database which holds information about application client related data associated to the application, a database which holds information about user specific data of the first user and a database which holds information about user specific data of the second user. For example, the application client related data associated to the application comprises the name and/or the identifier of the application, the version of the application, and/or default data for instrumenting the application client, like IP-ports. Preferably, the user specific data of the first user comprises user default data for instrumenting the application client, and/or a look-up table which comprises information about which second user is authorized to contact the first user and/or information about which applications are allowed to be started remotely. The SIP dispatcher extracts application client related data from the database. The SIP dispatcher generates the data for instrumenting the selected application client according to said data extracted from the database.

According to a preferred embodiment of the invention the SIP dispatcher extracts from the SIP-invite message additional data related to the parameterization of the application. Preferably, the SIP dispatcher extracts the additional data related to the parameterization of the application from a body of the SIP-invite message. For example, the body of the SIP-invite message is described using the session description protocol (SDP = session description protocol). The session description protocol provides one or more optional session attributes for storing the additional data. Preferably, the format of the stored additional data within the SIP-invite message is defined by the mime standard and/or the XML-scheme (mime = multipurpose internet mail extension, XML = extensible markup language)" The SIP dispatcher generates the data for instrumenting the selected application client according to said additional data extracted from the SIP-invite message.

According to a preferred embodiment of the invention the SIP dispatcher checks if a second user, who is indicated in the SIP-invite message as sender of the SIP-invite message, is securely identified and authorized to contact the first terminal and/or to invoke the application. The SIP dispatcher accesses a database which comprises user-specific data of the first user. The database holds information and/or authorizations associated with a plurality of second users. The SIP dispatcher filters out data of the second user who is indicated in the SIP-invite message as sender of the SIP-invite message. The SIP dispatcher determines by means of the filtered data if the second user is authorized to contact the first terminal and/or to invoke the application. Preferably, the database is part of the first terminal, the SIP dispatcher or at a remote database server. The SIP dispatcher sends a SIP error response message to the second user to reject the SIP-invite message if the second user is not authorized to contact the first terminal and/or to invoke the application.

According to the invention the SIP dispatcher checks if the first user accepts the SIP-invite message by means of accessing a database and/or by requesting an input of a corresponding command via a user interface from the first user. The database holds information about user specific data of the first user. Preferably, the information comprises preferences indicating whether the first user accepts SIP-invite messages for the application indicated in the received SIP-invite message. For example, the database is part of the first terminal, the SIP dispatcher or a remote database server. Preferably, the SIP dispatcher requests an input of a corresponding command via a user interface from the first user to accept the SIP-invite message by means of an interactive pop-up window on the first terminal. For example, the user interface of the first terminal is a keyboard and/or a mouse and a display associated to the first terminal. The SIP dispatcher sends a SIP error response message to the second user to reject the SIP-invite message if the first user does not accept the SIP-invite message.

According to a preferred embodiment of the invention the SIP dispatcher checks if an up-to-date version of the selected application client is installed on the terminal by means of accessing a database. The database comprises application client related data. For example, the accessed database is organized as a look-up table. Preferably, the application client related data comprises information about whether the application client is installed on the first terminal, the location of the application client, and/or the version of the application client installed on the first terminal. Further, the application client related data comprises information about a download location of the application client and its respective version. The download location is e.g. a software server connected with first terminal via the communication network. The SIP dispatcher checks if the up-to-date version of the application client can be downloaded from a software server. The SIP dispatcher sends a download request to the software server to download the application client. The SIP dispatcher downloads the application client and installs the application client at the first terminal.

According to a preferred embodiment of the invention, the SIP dispatcher checks if the application client does contain any malware like a virus, a trojan, and/or spyware. Preferably, the SIP dispatcher removes the application client form the first terminal. The SIP dispatcher comprises means to remove from the first terminal one or more of the application clients. For example, the SIP dispatcher invokes an uninstalling process to remove from the first terminal one or more of the application clients registered in database used for selection of the appropriate application client. Furthermore, it is possible, that the SIP-invite message comprises information, about a specific version of client that is preferably being used to serve the application. The SIP dispatcher extracts this information too, and respects this additional information in the selection process.

According to a preferred embodiment of the invention the SIP dispatcher receives a dedicated type of SIP message to terminate an application. This dedicated type of SIP message comprises specific information, e.g. a specific command word, in its body which indicates that an application should be terminated. Further, the body of this SIP-invite message comprises information about the application that should be terminated. To terminate the application, such SIP message is sent to the first user. The SIP dispatcher intercepts said SIP message at the first terminal of the communication network. The SIP dispatcher extracts the information about the application from said SIP message. The SIP dispatcher terminates the application client if the SIP dispatcher detects that the received SIP message is of the dedicated SIP message type and comprises information about the application associated with the respective application client.

Preferably, the SIP dispatcher terminates the SIP related communication of the session initiation protocol associated to an application client after the application client has been invoked.

It is possible that the SIP message comprises information about one or more applications to be invoked by the SIP dispatcher at the first terminal.

Preferably, the SIP dispatcher uses a predetermined application programming interface (API = application programming interface) to access application clients and/or instrument these application clients. Furthermore, the first terminal provides an API interface to provide access to an operating system of the first terminal and devices associated to the first terminal, like communication means.

Preferably, the first terminal is a computer, a personal computer, a personal digital assistant (PDA = personal digital assistant), a mobile phone and/or a smart phone.

These as well as further features and advantages of the invention will be better appreciated by reading the following detailed description of presently preferred exemplary embodiments taken in conjunction with accompanying drawings of which:
- Figure 1: is a diagram of a communication network comprising components of an embodiment of the invention.
- Figure 2: is a flow-chart associated with an embodiment of the invention.

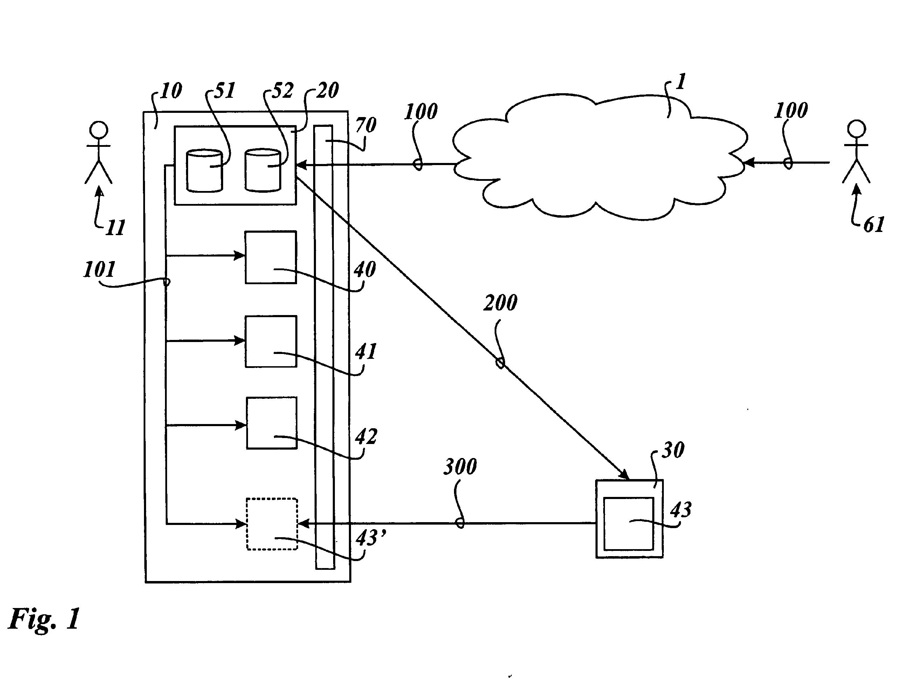

Figure 1 shows a communication network 1 comprising a SIP infrastructure, a first terminal 10 associated with a first user 11, a second user 61 and a software server 30.

The communication network 1 is an IP-packed based network. The communication network 1 comprises a plurality of network nodes, e.g. routers, servers, home subscriber servers, roaming servers, application servers, etc.. The network nodes provide an IP-routing infrastructure as well as a SIP infrastructure, e.g. SIP call servers, SIP registrars, SIP session boarder controllers, etc.. The SIP infrastructure of the communication network 1 includes hardware means and/or software means for user identification, registration, a authentication, routing and redirecting of SIP messages.

The software server 30 comprises a database for holding a plurality of application clients and application client related data. Further, the software server 30 comprises communication means for receiving download requests 200 and transmitting downloads 300 via the communication network 1.

The first terminal 10 is a computer, a personal computer, a PDA, a mobile phone and/or a smart phone. The first terminal 10 comprises communication means 70, a SIP dispatcher 20, input/output means for interaction with the first user 11, e.g. a display and a keyboard, storage means for storing a conversational SIP client 40 and application clients 41, 42, 43. A common application programming interface is used for transmitting the data for instrumenting 101 the application client. Further, the first terminal 10 provides hardware and software functionality to execute the application clients 40, 41, 42, 43.

The communication means 70 of the first terminal 10 comprises the necessary hardware and software means for communicating via the communication network 1. The communication means 70 comprise, for instance an Ethernet card, a modem, a wireless local area network card, and TCP/IP stack (TCP = transmission control protocol).

The application clients 40, 41, 42, 43 are constituted of code and data used for executing an associated application on the first terminal 10. One or more applications clients 40, 41, 42, 43 can be associated to a single application. Typical applications are for instance real-time applications, e.g. IP-based video conferencing, voice over IP conferencing, IPTV, and none real-time applications, like interactive remote shells, turn based multiplayer computer games, etc., or even non-interactive applications, like the remote start of terminal maintenance programs.

The SIP dispatcher 20 of the first terminal 10 comprises code and data for performing the functions of the SIP dispatcher 20 and processing the SIP protocol stack, a first database 51 for holding information about a plurality of application clients, e.g. the application clients 40, 41, 42, 43, and a second database 52 for holding information about a plurality of the first users and a plurality of the second users, e.g. the second user 61. Preferably, the databases 51 and 52 are organized as look-up tables. But it is also possible that the databases 51 and 52 have a more complex data structure.

The first database 51 holds information to map a plurality of applications to one or more associated application clients. The first database 51 stores for each application a plurality of application client related data like the name of the applications, the associated application clients, the version of associated installed application clients, the versions of associated application clients which are available to be installed from one or more remote sources, and a communication address/name of a software server which has to be contacted to download the respective application client. It is possible that the database holds a dataset for each application and a dataset for each application client which is registered in the database 51. Each dataset associated with an application has a link to one or more datasets associated with an application client and holding the aforementioned application client related data. Further, the application client related data holds data for instrumenting the respective application client, for example default values for instrumenting the application client.

The second database 52 comprises user specific data of the first user 11 and/or a plurality of second users. The user specific data of the first user 11 comprises user preferences, e.g. user specific default values for instrumenting the application clients 40, 41, 42, 43, information which supports the mapping of the correspondence between the application and the application clients 40, 41, 42, 43 registered in the database 51, information whether it is allowed to invoke a respective application remotely, authorizations associated with the second users, etc.. These authorizations specify whether it is allowed or disallowed for the respective second user 61 to invoke the respective application. The authorization could be linked with additional data, e.g. a set of rules for defining the authorization process. The user specific data of the second users comprises user preferences, e.g. user specific default values, for instrumenting the application clients 40, 41, 42, 43.

The SIP dispatcher 20 performs the following functions, when executed on the hardware and software platform of the first terminal 10:

The SIP dispatcher 20 is an SIP enhanced application client residing and running on the first terminal 10 of the communication network 1. The second user 61 sends a SIP-invite message 100 through the communication network 1 to invoke an application at the first terminal 10 of the first user 11. The SIP infrastructure of the communication network 1 detects that the first terminal 10 is associated with the user 11 indicated in the SIP-invite message 100 and routs the SIP-invite message 100 to the first terminal 10. The SIP dispatcher 20 receives the SIP-invite message 100 at the first terminal 10. The SIP dispatcher 20 extracts the information about the application from the SIP-invite message 100. It accesses the databases 51 and 52 and selects by means of data extracted from the databases 51 and 52 and from the SIP-invite message 100 one of the plurality of the application clients available at the first terminal 10. It determines by means of the extracted data which of these available application clients is the most appropriate application client for performing the application specified in the SIP-invite message. The SIP dispatcher 20 performs all necessary steps to generate data for instrumenting the selected application client. It accesses the database 51 and 52 and extracts the application client specific data as well as user specific data the users 11 and 61 available for instrumenting the selected application client. Furthermore, it is possible that the sender of the SIP-invite message 100 inserts additional data into the SIP-invite message 100 to control or influence the instrumenting of the selected application. The SIP dispatcher 20 extracts that information from the SIP-invite message 100 and uses that data within the data generation process. In the following the SIP dispatcher instruments the selected application client according to that generated data and invokes the selected application client on the first terminal 10.

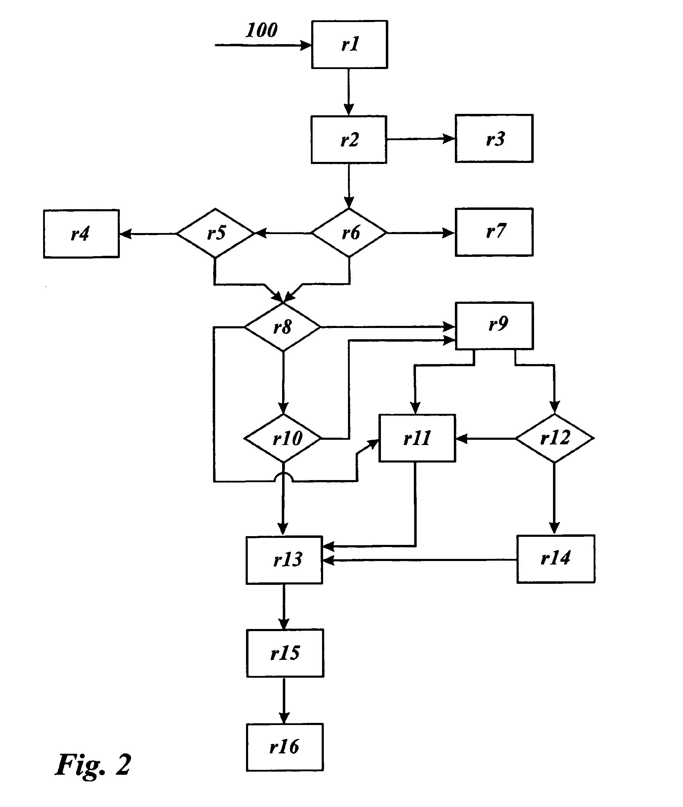

In the following, details of the method performed by the SIP dispatcher 20 are described by hand of figure 2.

The figure 2 shows a flow-chart of the method with the steps r1 to r16 performed by the SIP dispatcher 20.

The method is illustrated using the example of one user 61 inviting the user 11 to an AmigoTV application session. The user 61 desires to invite the user 11 to an AmigoTV session, whereby an AmigoTV application has not yet been invoked. By means of AmigoTV, IPTV providers or operators can provide their IPTV subscribers with a real-time community TV application. AmigoTV provides real-time voice communications, and real-time multimedia messaging on TV.

To invoke the AmigoTV session, the user 61 sends to the user 11 a SIP-invite message 100 via the communication network 1 to invite the user 11 to the AmigoTV session. The body of the SIP-invite message 100 comprises session description data according to the session description protocol (SDP). The body of the SIP-invite message 100 comprises an optional dot-separated hierarchical category attribute, e.g. "a=cat:AmigoTV.IPTV" for enabling the SIP dispatcher 20, i.e. the receiver, to identify the type of application client to invoke and to filter unwanted sessions by category. Alternatively, a new attribute can be defined for the same purpose, e.g. "a=sessionType:AmigoTV.IPTV". This optional attribute specifies the application that has to be invoked. Further optional attributes are used within the body of the SIP-invite message to transport further data, e.g. for influencing the instrumenting. The header of the SIP-invite message 100 comprises SIP related data, e.g. the SIP addresses of the users 11 and 61, content-type of the body of the SIP-invite message 100, the SIP call-id, the length of the SIP body, etc..

At the first step r1, the SIP-invite message 100 is received via the communication means 70 of the first terminal 10. The communication means 70 transfer the SIP-invite message 100 to the SIP dispatcher 20 for further processing.

At the step r2, the SIP dispatcher 20 determines whether the user 61 is authorized to contact the user 11, whereby the SIP dispatcher 20 performs the following steps:
The SIP dispatcher 20 accesses the header of the SIP-invite message 100 and extracts the sender, i.e. the user 61. Optionally, the SIP dispatcher 20 authenticates the sender. The SIP dispatcher 20 accesses the second database 52 to determine whether the user 61 is authorized to contact the user 11 and/or is authorized to invoke the application specified in the SIP-invite message 100. If this is not the case the SIP dispatcher 20 sends a SIP error response message to , reject the session invitation by the user 61 and thereby terminates the SIP session request (step r3). In the other case the SIP dispatcher 20 continues with the step r6.

At the step r6, the SIP dispatcher 20 determines whether the user 11 accepts the invitation to the application indicated in the body of the SIP-invite message 100, whereby the SIP dispatcher 20 performs the following steps:
The SIP dispatcher 20 accesses the database 52 and extracts user specific data of the user 11. By means of this data it tries to determine if the user 11 allows participating at sessions controlled by the application indicated in the body of the SIP-invite message 100. In the case that the SIP dispatcher 20 finds a general authorization of the user 11 to invoke the application indicated in the SIP-invite message100, the SIP dispatcher 20 continues with the step r8. If the SIP dispatcher is unable to find and/or extract any respective information or does not find a general authorization, the SIP dispatcher 20 continues with an interactive check (step r5). If the SIP dispatcher finds a general rule to reject the invocation of the application by the user 61, the SIP dispatcher 20 sends a SIP error response message to reject the session invitation by the user 61 (step r7).

At the step r5, the SIP dispatcher 20 determines whether the user 11 accepts the invitation to the application indicated in the body of the SIP-invite message 100 if the result of the check step r6 was undefined. The SIP dispatcher 20 performs the following steps:
The SIP dispatcher 20 may open a pop-up window at a display of the first terminal 10 in order to ask the user 11 whether the user 11 wants to participate at the session controlled by the application indicated in the body of the SIP-invite message 100. If the user 11 does not acknowledge positively, the SIP dispatcher 20 sends a SIP error response message to reject the session invitation by the user 61 (step r4). If the user 11 acknowledges the query, the SIP dispatcher 20 continues with the step r8.

At the steps r8 to r12 the SIP dispatcher 20 performs a selection process and finds an application client associated with the application indicated in the SIP-invite message 100.

At the step r8, the SIP dispatcher 20 determines an application client associated with the application indicated in the body of the SIP-invite message 100, whereby the SIP dispatcher 20 performs the following steps:
The SIP dispatcher 20 extracts the information about the application from the SIP-invite message 100 and accesses the database 51. It determines by means of this data which of the already installed application clients, e.g. the application clients 41, 42 corresponds to the application. In the case, the application is unknown, i.e. the mapping data of the database 51 does not link any application client with the application, the SIP dispatcher 20 continues with the step r11, i.e. it selects a "fall-back" solution. In the case that an application client application client is linked with the application but is not installed at first terminal 10, the SIP dispatcher 20 continues with the step r9. In the other cases, i.e. an application client which is linked to the application is also installed at the first terminal 10, the SIP dispatcher 20 continues with the step r10.

At the step r10, the SIP dispatcher 20 performs various checks with regard to the version of the application client, whereby the SIP dispatcher 20 performs the following steps:
The SIP dispatcher 20 accesses the database 51 to determine the version of the selected application client installed at the first terminal 10. A variable specifying the "up-to-date" version is set to the version indicated in the SIP-invite message 100. In the case that no specific version has been indicated, the SIP dispatcher 20 determines which version of the application client is the "up-to-date" version and set the variable to that value. Then the SIP dispatcher 20 compares the version determined from the database with the variable. In the case, the version defined by the variable is installed at the first terminal 10, the SIP dispatcher 20 continues with the step r13. In the other cases the SIP dispatcher 20 continues with the step r9.

At the step r9, the SIP dispatcher 20 obtains the version specified in the variable, whereby the variable is set to the version indicated in the SIP-invite message 100 or the variable is set to "up-to-date" if the variable is undefined. The SIP dispatcher 20 performs the following steps:
The SIP dispatcher 20 sends a download request 200 to a software server 30 by using the communication means 70 of the first terminal 10. If the application client 43 is available for download at the software server 30, the SIP dispatcher 20 receives the code of the application client 43 via a download response 300 of the software server 30 through the communication means 70. The SIP dispatcher 20 stores the application client 43 in a designated storage area 43' of the first terminal 10 and continues with a security check (step r12). In the case that the SIP dispatcher 20 does not receive the requested application client 43, the SIP dispatcher 20 continues with the step r11.

At the step r12, the SIP dispatcher 20 performs a security check to assure the safe execution of the requested application client 43. The SIP dispatcher 20 verifies a cryptographic signature or scans the requested application client 43 for malware, e.g. viruses, trojans or spyware. In the case that the signature is correct or the scan does not detect any kind of the malware then the SIP dispatcher 20 continues with the step r14. In the case that the signature is incorrect or the scan does detect one or more kinds of the malware then the SIP dispatcher 20 continues with the step r11.

At the step r11, the SIP dispatcher 20 selects a conversational SIP user agent 40 as application client associated with the application. The SIP dispatcher continues with the step r13.

At the step r14, the SIP dispatcher 20 installs the downloaded application client 43 and registers this client in the database 51. The SIP dispatcher continues with the step r13.

At the step r13, the SIP dispatcher 20 instruments the selected application client, whereby the SIP dispatcher 20 performs the following steps:
The SIP dispatcher 20 accesses the database 51 to extract the default values for instrumenting the selected application client. The SIP dispatcher 20 accesses the database 52 to extract the user specific default values of the users 11 and 61 for instrumenting the selected application client. The SIP dispatcher 20 accesses the body of the SIP-invite message 100 to extract further user specific default values of the user 61 for instrumenting the selected application client. The SIP dispatcher 20 instruments the selected application client according that extracted data and continues with the step r15.

At the step r15, the SIP dispatcher 20 invokes the selected application client on the first terminal 10 and preferably continues with the step r16.

At the step r16, the SIP dispatcher 20 may continue relaying SIP messages between first terminal 10 and user 61 or may drop out of the message exchange via the SIP protocol between the application client and user 61.

## Claims

1. A method of invoking an application on a first terminal (10) associated with
a first user (11) via a communication network (1),
wherein the method comprises the steps of:
sending a SIP-invite message (100) comprising information about the application through the communication network (1) to the first terminal (10) associated with the first user (11) whereby the SIP-invite message (100) is directed to the first user (11);
intercepting, by a SIP dispatcher (20) which is a single SIP user agent dedicated for handling several applications, the SIP-invite message (100) at the first terminal (10);
checking, by the SIP dispatcher, if the first user (11) accepts the said SIP-invite message (100) by means of accessing a database (51, 52) comprising user specific data of the first user (11) and/or by requesting an input of a corresponding command via a user interface from the first user (11);
sending, by the SIP dispatcher (20), a SIP error response message to reject the SIP-invite message (100) to a second user (61) who is indicated in the SIP-invite message (100) as sender of the SIP-invite message (100), if the first user (11) does not accept the said SIP-invite message (100);
if the first user (11) accepts the said SIP-invite message extracting, by the SIP dispatcher (20), the information about the application from the SIP-invite message (100) and selecting an application client (40, 41, 42, 43) associated with the application by means of the extracted information;
generating, by the SIP dispatcher (20), data for instrumenting the selected application client (40, 41, 42, 43);
instrumenting, by the SIP dispatcher (20), the selected application client (40, 41, 42, 43) at the first terminal (10) according to the data generated for instrumenting the selected application client (40, 41, 42, 43); and
invoking, by the SIP dispatcher (20), the selected application client (40, 41, 42, 43) on the first terminal (10).

2. The method according to claim 1,
wherein the step of selecting an application client (40, 41, 42, 43) comprises the steps of:
accessing, by the SIP dispatcher (20), the database (51, 52) holding information about two or more different application clients (40, 41, 42, 43) available at the first terminal (10); and
determining by means of the extracted information which of said available two or more application clients (40, 41, 42, 43) corresponds with the application.

3. The method according to claim 1,
wherein the method comprises the further steps of:
accessing the database (51, 52) and extracting application client related data associated to the application and/or user specific data of the first user (11) and/or of the second user (61) who is indicated in the SIP-invite message (100) as sender of the SIP-invite message (100); and
generating, by the SIP dispatcher (20), the data for instrumenting the selected application client (40, 41, 42, 43) according to said data extracted from the database (51, 52).

4. The method according to claim 1,
wherein the method comprises the further steps of:
extracting, by the SIP dispatcher (20), from the SIP invite message (100) additional data related to the parameterization of the application; and generating, by the SIP dispatcher (20), the data for instrumenting the selected application client (40, 41, 42, 43) according to said additional data extracted from the SIP-invite message (100).

5. The method according to claim 1,
wherein the method comprises the further steps of:
checking, by the SIP dispatcher (20), if the second user (61) who is indicated in the SIP-invite message (100) as sender of the SIP-invite message (100), is authorized to contact the first terminal (10) and/or to invoke the application by means of accessing the database (51, 52) comprising user specific data of the first user (11); and
sending, by the SIP dispatcher (20), a SIP error response message to the second user (61) to reject the SIP-invite message (100) if the second user (61) is not authorized to contact the first terminal (10) and/or to invoke the application.

6. The method according to claim 1,
wherein the method comprises the further steps of:
checking, by the SIP dispatcher (20), if an up-to-date version of the selected application client (40, 41, 42, 43) is installed on the first terminal (10) by means of accessing the database (51, 52) comprising application client related data;
checking, by the SIP dispatcher (20), if the up-to-date version of the application client (40, 41, 42, 43) can be downloaded from a software server (30) if the up-to-date version of the application client (40, 41, 42, 43) is not installed; and
sending, by the SIP dispatcher (20), a download request (200) to the software server (30) to download (300) the application client (40, 41, 42, 43) from the software server (30), downloading (300) and installing the application client (40, 41, 42, 43), if the up-to-date version of the application client (40, 41, 42, 43) is not installed and if the up-to-date version of the application client (40, 41, 42, 43) can be downloaded from the software server (30).

7. The method according to claim 1,
wherein the method comprises the further steps of:
to terminate the application, sending a dedicated type of SIP message (100) comprising information about the application and directed to the first user (11) through the communication network (1) to the first terminal (10) associated with the first user (11) ;
intercepting, by the SIP dispatcher (20), said SIP message (100) at the first terminal (10);
extracting, by the SIP dispatcher (20), the information about the application from said SIP message (100); and
terminating the application client (40, 41, 42, 43), if the SIP dispatcher (20) detects that the received SIP message (100) is of the dedicated SIP message (100) type and comprises information about the application associated with the respective application client (40, 41, 42, 43).

8. A first terminal (10) associated with a first user (11) of a communication network (1), wherein the first terminal (10) comprises communication means (70) for communicating via the communication network and receiving SIP messages exchanged via the communication network (1), **characterized in that** the first terminal (10) comprises a SIP dispatcher (20) which is a single SIP user agent dedicated for handling several applications and which is adapted to:
intercept a SIP-invite message (100) received at the first terminal (10), the SIP-invite message (100) comprising information about the application whereby the SIP-invite message (100) is directed to the first user (11);
check if the first user (11) accepts the said SIP-invite message (100) by means of accessing a database (51, 52) comprising user specific data of the first user (11) and/or by requesting an input of a corresponding command via a user interface from the first user (11);
send a SIP error response message to reject the SIP-invite message (100) to a second user (61) who is indicated in the SIP-invite message (100) as sender of the SIP-invite message (100), if the first user (11) does not accept the said SIP-invite message (100);
if the first user (11) accepts the said SIP- invite message extract the information about the application from the SIP-invite message (100) and select an application client (40, 41, 42, 43) associated with the application by means of the extracted information;
generate data for instrumenting the selected application client (40, 41, 42, 43);
instrument the selected application client (40, 41, 42, 43) at the first terminal (10) according to the data generated for instrumenting the selected application client (40, 41, 42, 43); and
invoke the selected application client (40, 41, 42, 43) on the first terminal (10).

9. A computer program product for a first terminal (10) associated with a first
user (11) of a communication network (1),
wherein the computer program product, when executed by the first terminal (10) performs the steps of:
intercepting a SIP-invite message (100) at the first terminal (10), the SIP-invite message (100) comprising information about the application whereby the SIP-invite message (100) is directed to the first user (11);
checking if the first user (11) accepts the said SIP-invite message (100) by means of accessing a database (51, 52) comprising user specific data of the first user (11) and/or by requesting an input of a corresponding command via a user interface from the first user (11);
sending a SIP error response message to reject the SIP-invite message (100) to a second user (61) who is indicated in the SIP-invite message (100) as sender of the SIP-invite message (100), if the first user (11) does not accept the said SIP-invite message (100);
if the first user (11) accepts the said SIP- invite message extracting the information about the application from the SIP-invite message (100) and selecting an application client (40, 41, 42, 43) associated with the application by means of the extracted information;
generating data for instrumenting the selected application client (40, 41, 42, 43);
instrumenting the selected application client (40, 41, 42, 43) at the first terminal (10) according to the data generated for instrumenting the selected application client (40, 41, 42, 43); and
invoking the selected application client (40, 41, 42, 43) on the first terminal (10).

## Patentansprüche

1. Ein Verfahren zum Aufrufen einer Anwendung auf einem ersten Endgerät (10), welches mit einem ersten Benutzer (11) assoziiert ist, über ein Kommunikationsnetzwerk (1),
wobei das Verfahren die folgenden Schritte umfasst:
Senden einer SIP-Invite-Nachricht (100), welche Informationen über die Anwendung über das Kommunikationsnetzwerk (1) enthält, an das erste Endgerät (10), welches mit dem ersten Benutzer (11) assoziiert ist, wobei die SIP-Invite-Nachricht (100) an den ersten Benutzer (11) gerichtet ist;
Abfangen, durch einen SIP-Dispatcher (20), welcher ein einzelner SIP-Benutzeragent und der Bearbeitung von mehreren Anwendungen gewidmet Ist, der SIP-Invite-Nachricht (100) am ersten Endgerät (10);
Prüfen, durch den SIP-Dispatcher, ob der erste Benutzer (11) die besagte SIP-Invite-Nachricht (100) annimmt, durch Zugriff auf eine Datenbank (51, 52), welche benutzerspezifische Daten des ersten Benutzers (11) enthält, und/oder durch Anfordern einer Eingabe eines entsprechenden Befehls über eine Benutzerschnittstelle durch den ersten Benutzer (11);
Senden, durch den SIP-Dispatcher (20), einer SIP-Fehlerantwortnechricht zum Zurückweisen der SIP-Invite-Nachricht (100) an einen zweiten Benutzer (61), welcher in der SIP-Invite-Message (100) als Absender der SIP-Invite-Nachricht (100) angegeben ist, wenn der erste Benutzer (11) die besagte SIP-Irivite-Nachricht (100) nicht annimmt;
wenn der erste Benutzer (11) die besagte SIP-Invite-Nachricht annimmt, Extrahieren, durch den SIP-Dispatcher (20), der Information über die Anwendung aus der SIP-Invite-Nachricht (100), und Auswählen eines Anwendungsclienten (40, 41, 42, 43), welcher mit der Anwendung assoziiert ist, anhand der extrahierten Information;
Erzeugen, durch den SIP-Dispatcher (20), von Daten zur Instrumentierung des ausgewählten Anwendungsclienten (40, 41, 42, 43);
Instrumentieren, durch den SIP-Dispatcher (20), des ausgewählten Anwendungsclienten (40, 41, 42, 43) am ersten Endgerät (10) gemäß den für die Instrumentierung des ausgewählten Anwendungsclienten (40, 41, 42, 43) erzeugten Daten; und
Aufrufen, durch den SIP-Dispatcher (20), des ausgewählten Anwendungsclienten (40, 41, 42, 43) auf dem ersten Endgerät (10).

2. Das Verfahren nach Anspruch 1,
wobei der Schritt des Auswählens eines Anwendungsclienten (40, 41, 42, 43) die folgenden Schritte umfasst:
Zugreifen, durch den SIP-Dispatcher (20), auf die Datenbank (51, 52), welche die Informationen über zwei oder mehrere verschiedene Anwendungsclienten (40, 41, 42, 43), die auf dem ersten Endgerät (10) verfügbar sind, enthält; und
Ermitteln, anhand der extrahierten Information, welcher der besagten verfügbaren zwei oder mehreren Anwendungsclienten (40, 41, 42, 43) der Anwendung entspricht.

3. Das Verfahren nach Anspruch 1,
wobei das Verfahren die folgenden weiteren Schritte umfasst:
Zugreifen auf die Datenbank (51, 52) und Extrahieren von anwendungsclientbezogenen Daten, welche mit der Anwendung assoziiert sind, und/oder von benutzerspezifischen Daten des ersten Benutzers (11) und/oder des zweiten Benutzers (61), welcher in der SIP-Invite-Nachricht (100) als Absender der SIP-Invite-Nachricht (100) angegeben ist; und Erzeugen, durch den SIP-Dispatcher (20), von Daten zur Instrumentierung des ausgewählten Anwendungsclienten (40, 41, 42, 43) gemäß den besagten aus der Datenbank (51, 52) extrahierten Daten.

4. Das Verfahren nach Anspruch 1,
wobei das Verfahren die folgenden weiteren Schritte umfasst:
Extrahieren, durch den SIP-Dispatcher (20), von zusätzlichen, die Parametrislerung der Anwendung betreffende Daten aus der SIP-Invite-Nachricht (100); und Erzeugen, durch den SIP-Dispatcher (20), der Daten zur Instrumentierung des ausgewählten Anwendungsclienten (40, 41, 42, 43) gemäß den besagten zusätzlichen, aus der SIP-Invite-Nachricht (100) extrahierten Daten.

5. Das Verfahren nach Anspruch 1,
wobei das Verfahren die folgenden weiteren Schritte umfasst:
Prüfen, durch den SIP-Dispatcher (20), ob der zweite Benutzer (61), welcher in der SIP-Invite-Nachricht (100) als Absender der SIP-Invite-Nachricht (100) angegeben Ist, berechtigt ist, mit dem ersten Endgerät (10) in Kontakt zu treten und/oder die Anwendung durch Zugriff auf die Datenbank (51, 52), welche benutzerspezifische Daten des ersten Benutzers (11) enthält, aufzurufen; und
Senden, durch den SIP-Dispatcher (20), einer SIP-Fehlerantwortnachricht an den zweiten Benutzer (61) zum Zurückweisen der SIP-Invite-Nachricht (100), wenn der zweite Benutzer (61) nicht berechtigt ist, mit dem ersten Endgerät (10) in Kontakt zu treten und/oder die Anwendung aufzurufen.

6. Das Verfahren nach Anspruch 1,
wobei das Verfahren die folgenden weiteren Schritte umfasst:
Prüfen, durch den SIP-Dispatcher (20), ob eine aktualisierte Version des ausgewählten Anwendungsclienten (40, 41, 42, 43) auf dem ersten Endgerät installiert ist, durch Zugreifen auf die Datenbank (51, 52), welche die anwendungsclientbezogenen Daten enthält;
Prüfen, durch den SIP-Dispatcher (20), ob die aktualisierte Version des Anwendungsclienten (40, 41, 42, 43) von einem Software-Server (30) heruntergeladen werden kann, wenn die aktualisierte Version des Anwendungsclienten (40, 41, 42, 43) nicht installiert ist; und
Senden, durch den SIP-Dispatcher (20), einer Download-Anfrage (200) an den Software-Server (30), um den Anwendungsclienten (40, 41, 42, 43) von dem Software-Server (30) herunterzuladen (300), Herunterladen (300) und Installieren des Anwendungsclienten (40, 41, 42, 43), wenn die aktualisierte Version des Anwendungsclienten (40, 41, 42, 43) nicht installiert ist und die aktualisierte Version des Anwendungsclienten (40, 41, 42, 43) von dem Software-Server (30) heruntergeladen werden kann.

7. Das Verfahren nach Anspruch 1,
wobei das Verfahren die folgenden weiteren Schritte umfasst:
Um die Anwendung zu beenden, Senden eines dedizierten Typs der SIP-Nachricht (100), welche die Informationen über die Anwendung enthält und an den ersten Benutzer (11) gerichtet ist, über das Kommunikationsnetzwerk (1) an das erste Endgerät (10), welches mit dem ersten Benutzer (11) assoziiert ist;
Abfangen, durch den SIP-Dispatcher (20), der besagten SIP-Nachricht (100) an dem ersten Endgerät (10);
Extrahieren, durch den SIP-Dispatcher (20), der Informationen über die Anwendung aus der besagten SIP-Nachricht (100); und
Beenden des Anwendungsclienten (40, 41, 42, 43), wenn der SIP-Dispatcher (20) erkennt, dass die empfangene SIP-Nachricht vom Typ dedizierte SIP-Nachricht (100) ist und Informationen über die mit dem entsprechenden Anwendungsclienten (40, 41, 42, 43) assoziierte Anwendung enthält.

8. Ein erstes Endgerät (10), welches mit einem ersten Benutzer (11) eines Kommunikationsnetzwerks (1) assoziiert ist, wobei das erste Endgerät (10) Kommunikationsmittel (70) zur Kommunikation über das Kommunikationsnetzwerk und zum Empfang von über das Kommunikationsnetzwerk (1) ausgetauschten SIP-Nachrichten umfasst, **dadurch gekennzeichnet, dass** das erste Endgerät (10) einen SIP-Dispatcher (20) umfasst, welcher ein einzelner SIP-Benutzeragent und der Bearbeitung von mehreren Anwendungen gewidmet ist, und welcher fähig ist:
Eine am ersten Endgerät (10) empfangene SIP-Invite-Nachricht (100), welche Informationen über die Anwendung enthält, abzufangen, wobei die SIP-Invite-Nachricht an den ersten Benutzer (11) gerichtet ist;
zu prüfen, ob der erste Benutzer (11) die besagte SIP-Invite-Nachricht (100) annimmt, durch Zugriff auf eine Datenbank (51, 52), welche benutzerspezifische Daten des ersten Benutzers (11) enthält, und/oder durch Anfordern einer Eingabe eines entsprechenden Befehls über eine Benutzerschnittstelle durch den ersten Benutzer (11);
eine SIP-Fehlerantwortnachricht zum Zurückweisen der SIP-Invite-Nachricht (100) an einen zweiten Benutzer (61), welcher in der SIP-Invite-Message (100) als Absender der SIP-Invite-Nachricht (100) angegeben ist, zu senden, wenn der erste Benutzer (11) die besagte SIP-Invite-Nachricht (100) nicht annimmt;
wenn der erste Benutzer (11) die besagte SIP-Invite-Nachricht annimmt, die Informationen über die Anwendung aus der SIP-Invite-Nachricht (100) zu extrahieren und anhand der extrahierten Information einen Anwendungsclienten (40, 41, 42, 43), welcher mit der Anwendung assoziiert ist, auszuwählen;
Daten zur Instrumentierung des ausgewählten Anwendungsclienten (40, 41, 42, 43) zu erzeugen;
den ausgewählten Anwendungsclienten (40, 41. 42, 43) am ersten Endgerät (10) gemäß den für die Instrumentierung des ausgewählten Anwendungsclienten (40, 41, 42, 43) erzeugten Daten zu instrumentieren; und
den ausgewählten Anwendungsclienten (40, 41, 42, 43) auf dem ersten Endgerät (10) aufzurufen.

9. Ein Computerprogramm-Produkt für ein erstes Endgerät (10), welches mit einem ersten Benutzer (11) eines Kommunikationsnetzwerks (1) assoziiert ist,
wobei das Computerprogramm-Produkt, wenn es von dem ersten Endgerät (10) ausgeführt wird, die folgenden Schritt durchführt:
Abfangen einer SIP-Invite-Nachricht (100) am ersten Endgerät (10), wobei die SIP-Invlte-Nachricht (100) Informationen über die Anwendung beinhaltet, wobei die SIP-Invite-Nachricht (100) an den ersten Benutzer (11) gerichtet ist;
Prüfen, ob der erste Benutzer (11) die besagte SIP-Invite-Nachricht (100) annimmt, durch Zugriff auf eine Datenbank (51, 52), welche benutzerspazifische Daten des ersten Benutzers (11) enthält, und/oder durch Anfordern einer Eingabe eines entsprechenden Befehls über eine Benutzerschnittstelle durch den ersten Benutzer (11);
Senden einer SIP-Fehlerantwortnachricht zum Zurückweisen der SIP-Invite-Nachricht (100) an einen zweiten Benutzer (61), welcher in der SIP-Invite-Message (100) als Absender der SIP-Invite-Nachricht (100) angegeben ist, wenn der erste Benutzer (11) die besagte SIP-Invite-Nachricht (100) nicht annimmt;
Wenn der erste Benutzer (11) die besagte SIP-Invite-Nachricht annimmt, Extrahieren der Informationen über die Anwendung aus der SIP-Invite-Nachricht (100), und Auswählen eines Anwendungsclienten (40, 41, 42, 43), welcher mit der Anwendung assoziiert ist, anhand der extrahierten Information;
Erzeugen von Daten zur Instrumentierung des ausgewählten Anwendungsclienten (40, 41,42,43);
Instrumentieren des ausgewählten Anwendungsclienten (40, 41, 42, 43) an dem ersten Endgerät (10) gemäß den für die Instrumentierung des ausgewählten Anwendungsclienten (40, 41,42. 43) erzeugten Daten; und
Aufrufen des ausgewählten Anwendungsclienten (40, 41, 42, 43) auf dem ersten Endgerät (10).

## Revendications

1. Procédé destiné à appeler une application sur un premier terminal (10) associé à un premier utilisateur (11) par l'intermédiaire d'un réseau de communication (1), le procédé comprenant les étapes consistant à :
envoyer au premier terminal (10) associé au premier utilisateur (11), à travers le réseau de communication (1), un message d'invitation SIP (100) contenant des informations relatives à l'application, le message d'invitation SIP (100) étant dirigé vers le premier utilisateur (11) ;
intercepter, au moyen d'un répartiteur SIP (20) qui est un agent utilisateur SIP individuel dédié au traitement de plusieurs applications, le message d'invitation SIP (100) au niveau du premier terminal (10) ;
vérifier, au moyen du répartiteur SIP, si le premier utilisateur (11) accepte ledit message d'invitation SIP (100) par un accès à une base de données (51, 52) contenant des données spécifiques d'utilisateur du premier utilisateur (11) et/ou en demandant au premier utilisateur (11) d'entrer une commande correspondante par l'intermédiaire d'une interface utilisateur ;
envoyer, au moyen du répartiteur SIP (20), un message de réponse d'erreur SIP pour rejeter le message d'invitation SIP (100) à un deuxième utilisateur (61) qui est indiqué dans le message d'invitation SIP (100) en tant qu'expéditeur du message d'invitation SIP (100), si le premier utilisateur (11) n'accepte pas ledit message d'invitation SIP (100) ;
si le premier utilisateur (11) accepte ledit message d'invitation SIP :
extraire, au moyen du répartiteur SIP (20), les informations relatives à l'application contenues dans le message d'invitation SIP (100) et sélectionner un client d'application (40, 41, 42, 43) associé à l'application au moyen des informations extraites ;
générer, au moyen du répartiteur SIP (20), des données pour instrumenter le client d'application sélectionné (40, 41, 42, 43) ;
instrumenter, au moyen du répartiteur SIP (20), le client d'application sélectionné (40, 41, 42, 43) au niveau du premier terminal (10) en fonction des données générées pour instrumenter le client d'application sélectionné (40, 41, 42, 43) ; et
appeler, au moyen du répartiteur SIP (20), le client d'application sélectionné (40, 41, 42, 43) sur le premier terminal (10).

2. Procédé selon la revendication 1,
dans lequel l'étape de sélection d'un client d'application (40, 41, 42, 43) comprend les étapes consistant à :
accéder, au moyen du répartiteur SIP (20), à la base de données (51, 52) contenant des informations relatives à deux clients d'application différents ou plus (40, 41, 42, 43) disponibles au niveau du premier terminal (10) ; et
déterminer, au moyen des informations extraites, lequel des deux clients d'application disponibles ou plus (40, 41, 42, 43) correspond à l'application.

3. Procédé selon la revendication 1,
le procédé comprenant également les étapes consistant à :
accéder à la base de données (51, 52) et extraire les données liées au client d'application associées à l'application et/ou les données spécifiques d'utilisateur du premier utilisateur (11) et/ou du deuxième utilisateur (61) qui est indiqué dans le message d'invitation SIP (100) en tant qu'expéditeur du message d'invitation SIP (100) ; et générer, au moyen du répartiteur SIP (20), les données pour instrumenter le client d'application sélectionné (40, 41, 42, 43) en fonction desdites données extraites de la base de données (51, 52).

4. Procédé selon la revendication 1,
le procédé comprenant également les étapes consistant à :
extraire, au moyen du répartiteur SIP (20), dans le message d'invitation SIP (100), des données supplémentaires liées au paramétrage de l'application ; et générer, au moyen du répartiteur (20), les données pour instrumenter le client d'application sélectionné (40, 41, 42, 43) en fonction desdites données supplémentaires extraites du message d'invitation SIP (100).

5. Procédé selon la revendication 1,
le procédé comprenant également les étapes consistant à :
vérifier, au moyen du répartiteur SIP (20), si le deuxième utilisateur (61) qui est indiqué dans le message d'invitation SIP (100) en tant qu'expéditeur du message d'invitation SIP (100) est autorisé à contacter le premier terminal (10) et/ou à appeler l'application par un accès à la base de données (51, 52) contenant des données spécifiques d'utilisateur du premier utilisateur (11) ; et
envoyer, au moyen du répartiteur SIP (20), un message de réponse d'erreur SIP au deuxième utilisateur (61) pour rejeter le message d'invitation SIP (100) si le deuxième utilisateur (61) n'est pas autorisé à contacter le premier terminal (10) et/ou à appeler l'application.

6. Procédé selon la revendication 1,
le procédé comprenant également les étapes consistant à :
vérifier, au moyen du répartiteur SIP (20), si une version à jour du client d'application sélectionné (40, 41, 42, 43) est installée sur le premier terminal (10) par un accès à la base de données (51, 52) contenant des données liées au client d'application ;
vérifier, au moyen du répartiteur SIP (20), si la version à jour du client d'application (40, 41, 42, 43) peut être téléchargée depuis un serveur de logiciel (30) si la version à jour du client d'application (40, 41, 42, 43) n'est pas installée ; et
envoyer, au moyen du répartiteur SIP (20), une demande de téléchargement (200) au serveur de logiciel (30) pour télécharger (300) le client d'application (40, 41, 42, 43) depuis le serveur de logiciel (30), télécharger (300) et installer le client d'application (40, 41, 42, 43) si la version à jour du client d'application (40, 41, 42, 43) n'est pas installée et si la version à jour du client d'application (40, 41, 42, 43) peut être téléchargée depuis le serveur de logiciel (30).

7. Procédé selon la revendication 1,
le procédé comprenant également les étapes consistant à :
pour terminer l'application, envoyer au premier terminal (10) associé au premier utilisateur (11), à travers le réseau de communication (1), un type dédié de message SIP (100) contenant des informations relatives à l'application et dirigées vers le premier utilisateur (11) ;
intercepter, au moyen du répartiteur SIP (20), ledit message SIP (100) au niveau du premier terminal (10) ;
extraire, au moyen du répartiteur SIP (20), les informations relatives à l'application contenues dans ledit message SIP (100) ; et
interrompre le client d'application (40, 41, 42, 43) si le répartiteur SIP (20) détecte que le message SIP reçu (100) est du type message SIP dédié (100) et comprend des informations relatives à l'application associées au client d'application respectif (40, 41, 42, 43).

8. Premier terminal (10) associé à un premier utilisateur (11) d'un réseau de communication (1), le premier terminal (10) comprenant un moyen de communication (70) pour communiquer par l'intermédiaire du réseau de communication et recevoir des messages SIP échangés par l'intermédiaire du réseau de communication (1),
**caractérisé en ce que** le premier terminal (10) comprend un répartiteur SIP (20) qui est un agent utilisateur SIP individuel dédié au traitement de plusieurs applications et qui est conçu pour :
intercepter un message d'invitation SIP (100) reçu au niveau du premier terminal (10), le message d'invitation SIP (100) contenant des informations relatives à l'application, le message d'invitation SIP (100) étant dirigé vers le premier utilisateur (11);
vérifier si le premier utilisateur (11) accepte ledit message d'invitation SIP (100) par un accès à une base de données (51, 52) contenant des données spécifiques d'utllisateur du premier utilisateur (11) et/ou en demandant au premier utilisateur (11) d'entrer une commande correspondante par l'intermédiaire d'une interface utilisateur ; envoyer un message de réponse d'erreur SIP pour rejeter le message d'invitation SIP (100) à un deuxième utilisateur (61) qui est indiqué dans le message d'invitation SIP (100) en tant qu'expéditeur du message d'invitation SIP (100) si le premier utilisateur (11) n'accepte pas ledit message d'invitation SIP (100) ;
si le premier utilisateur (11) accepte ledit message d'invitation SIP :
extraire les informations relatives à l'application contenues dans le message d'invitation SIP (100) et sélectionner un client d'application (40, 41, 42, 43) associé à l'application au moyen des informations extraites ;
générer des données pour instrumenter le client d'application sélectionné (40, 41, 42, 43) ;
instrumenter le client d'application sélectionné (40, 41, 42, 43) au niveau du premier terminal (10) en fonction des données générées pour instrumenter le client d'application sélectionné (40, 41, 42, 43) ; et
appeler le client d'application sélectionné (40, 41, 42, 43) sur le premier terminal (10).

9. Produit de programme informatique pour un premier terminal (10) associé à un premier utilisateur (11) d'un réseau de communication (1),
dans lequel le produit de programme informatique, lorsqu'il est exécuté par le premier terminal (10), effectue les étapes consistant à :
intercepter un message d'invitation SIP (100) au niveau du premier terminal (10), le message d'invitation SIP (100) contenant des informations relatives à l'application, le message d'invitation SIP (100) étant dirigé vers le premier utilisateur (11) ;
vérifier si le premier utilisateur (11) accepte ledit message d'invitation SIP (100) par un accès à une base de données (51, 52) contenant des données spécifiques d'utilisateur du premier utilisateur (11) et/ou en demandant au premier utilisateur (11) d'entrer une commande correspondante par l'intermédiaire d'une interface utilisateur ; envoyer un message de réponse d'erreur SIP pour rejeter le message d'invitation SIP (100) à un deuxième utilisateur (61) qui est indiqué dans le message d'invitation SIP (100) en tant qu'expéditeur du message d'invitation SIP (100) si le premier utilisateur (11) n'accepte pas ledit message d'invitation SIP (100) ;
si le premier utilisateur (11) accepte ledit message d'invitation SIP :
extraire les informations relatives à l'application contenues dans le message d'invitation SIP (100) et sélectionner un client d'application (40, 41, 42, 43) associé à l'application au moyen des informations extraites ;
générer des données pour instrumenter le client d'application sélectionné (40, 41, 42, 43);
instrumenter le client d'application sélectionné (40, 41, 42, 43) au niveau du premier terminal (10) en fonction des données générées pour instrumenter le client d'application sélectionné (40, 41, 42, 43) ; et
appeler le client d'application sélectionné (40, 41, 42, 43) sur le premier terminal (10).
